# EUROPEAN PATENT APPLICATION

(11) **EP 2 799 518 A1**
(43) Date of publication of application: **05.11.2014**
(21) Application number: 14166042.3
(22) Date of filing: 25.04.2014
(51) Int. Cl.: C10G 33/00, C10G 33/04, C10G 33/06, C10G 32/02, B01D 35/06, B03C 1/02, C02F 101/32, C10G 31/08, C10G 31/09, C02F 1/68, B01D 17/04

(54) **Methods and systems for processing crude oil**

(30) Priority: 30.04.2013 US 201313873865
(71) Applicant: Pall Corporation, Port Washington, NY 11050 (US)
(72) Inventor: METCALFE, Allan David, Sarnia, Ontario N7S 5J1 (CA); LÉVESQUE, Francois, Repentigny, Québec J6A 0B3 (CA); LAKHANI, Hanif M., Markham, Ontario L3R 9J9 (CA)
(74) Representative: Hoeger, Stellrecht & Partner Patentanwälte

(57) **Abstract**

Methods and systems for processing crude oil may include adding water to crude oil, for example, in a desalter, to produce hydrocarbon and brine and a rag layer emulsion, which may include hydrocarbon and brine and solids. The emulsion may be modified, including adding one or more of additional hydrocarbon and, a demulsifier, a reverse demulsifier, a coagulant, and a flocculant, for example, in a mixer. The modified emulsion may be directed through a dead-end filter assembly to remove solids.

## Description

### Disclosure of the Invention

During some crude oil refinery processes, an emulsion also known as a "rag layer" or "slop" may form. This rag layer may include an emulsion comprising any one or more of several substances, including, for example, oil or hydrocarbons, brine, asphaltenes, and/or solids. The solids may include small solid particles of metal or grit or other substances as well as colloidal particles, and the rag layer may cause fouling and corrosion of the refinery system. Accordingly, there is a need for improved methods and systems for processing crude oil.

In accordance with one aspect of the invention, methods for processing crude oil may comprise adding water to crude oil to produce hydrocarbon and brine and a rag layer emulsion. The methods may further comprise modifying the rag layer emulsion, including adding one or more of additional hydrocarbon, a demulsifier, a reverse demulsifier, a coagulant, and a flocculant to the emulsion, and directing the modified emulsion through a dead-end filter assembly to remove solids. A dead-end filter assembly is one in which all fluid entering the filter assembly passes through a permeable or porous filter medium. As the modified emulsion passes through the filter medium of the dead-end filter assembly, all or a substantial portion of the solids are removed from the modified emulsion.

In accordance with another aspect of the invention, systems for processing crude oil may comprise a desalter, a mixer, and a dead-end filter assembly. The desalter may include one or more inlets for introducing crude oil and water into the desalter. The crude oil and water combine within the desalter to produce oil or hydrocarbon and brine and a rag layer emulsion. The desalter may also include a first outlet for discharging at least a portion of the hydrocarbon and one or more additional outlets for discharging the rag layer emulsion. The mixer, which may be coupled to the desalter, modifies the rag layer emulsion, including mixing the emulsion and one or more of additional hydrocarbon, a demulsifier, a reverse demulsifier, a coagulant, and a flocculant added to the emulsion. The dead-end filter assembly may be coupled to the mixer to filter solids from the modified emulsion.

Methods and systems embodying the invention provide many advantages. For example, methods and systems embodying the invention may advantageously reduce or eliminate fouling and/or corrosion in oil refinery systems by removing solids that would otherwise damage the components of the refinery system. Further, methods and systems of the invention allow the rag layer to be effectively and efficiently processed, recovering much of the rag layer hydrocarbon, including oil, that would otherwise be lost if the rag layer were not processed. Accordingly, the methods and systems of the invention may advantageously increase the reliability, efficiency, and capacity of oil refinery processes.

### Brief Disclosure of the Drawings

Figure **1** is a representative schematic view, not to scale, of one embodiment of a system for processing crude oil.
Figure **2** is a representative schematic view, not to scale, of another embodiment of a system for processing crude oil.
Figure **3** is a representative schematic view, not to scale, of another embodiment of a system for processing crude oil.
Figure **4** is a representative schematic view, not to scale, of another embodiment of a system for processing crude oil.

### Description of Embodiments

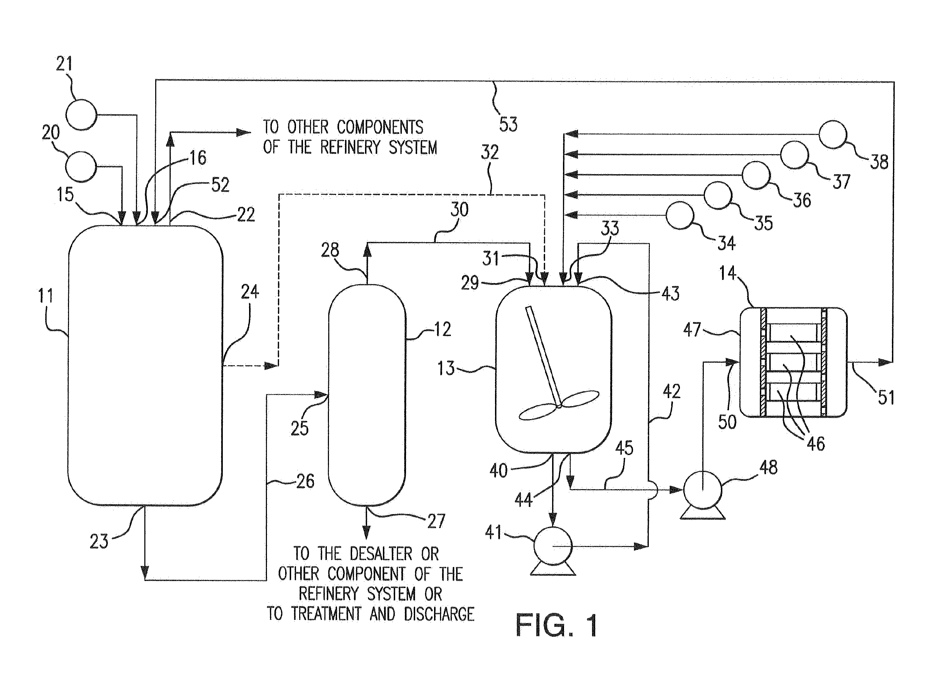

Systems and methods for processing crude oil in accordance with the invention may be configured in a wide variety of ways. One of many different examples of a system **10** for processing crude oil within a refinery system is shown in Figure **1**. Generally, the system **10** may comprise a desalter **11,** a mixer **13,** and a dead-end filter assembly **14.** In the illustrated embodiment, the system **10** may also comprise a separator **12** fluidly coupled between the desalter **11** and the mixer **13.** The desalter **11** removes metals and/or salts and other dissolvables from crude oil by combining crude oil and water to produce oil or hydrocarbon, brine, and a rag layer. The rag layer may be located on top of the brine, e.g., at the interface between the brine and the hydrocarbon, and/or entrained as droplets or masses within the brine. The rag layer comprises an emulsion of at least hydrocarbon, brine, and solids and may also include other substances such as asphaltenes. Some or all of the rag layer emulsion and brine may be directed to the separator **12,** which may remove a significant portion of the brine. The rag layer emulsion may be passed to the mixer **13** from the desalter **11** and/or the separator **12.** In the mixer **13** one or more of additional hydrocarbon, a demulsifier, a reverse demulsifier, a coagulant, and a flocculant may be mixed with the emulsion to produce a modified emulsion that may be effectively filtered by the dead-end filter assembly **14.** The modified emulsion may be passed to a dead-end filter assembly **14** to filter solids from the modified emulsion.

The components of the system **10** may be variously configured. For example, the desalter **11** may be configured in any of numerous ways. The desalter may take a variety of forms and shapes, including, for example, that of a tank, vessel, or receptacle, and may generally function as a coalescer, e.g., an electrostatic coalescer. The desalter may include ports for supplying substances to, and removing substances from, the desalter, and these ports may be positioned at a variety of locations on the desalter, e.g., on the top, bottom, or side of the desalter. For example, the desalter **11** may include one or more inlet ports **15, 16** for introducing crude oil and water into the desalter **11** from a source **20** of the crude oil and a source **21** of water, respectively. Alternatively, the crude oil and water may be combined upstream of the desalter and introduced into the desalter via a single inlet port. A heater (not shown) may be associated with the desalter and/or sources of the crude oil and water to heat the crude oil and water supplied to the desalter. The heater may be variously configured, including, for example, as a heat exchanger or a mechanism for injecting steam, e.g., directly into the desalter. Various other chemicals, including, for example, demulsifiers and/or corrosion inhibitors, may be supplied to the desalter via additional inlet ports or a common inlet port.

Within the desalter **11,** the water washes metals and/or salts and other dissolvables from the oil, forming brine. The denser coalesced brine separates toward the lower region of the desalter **11** away from the less dense hydrocarbon at the upper region of the desalter **11,** and a rag layer may form on top of the brine and/or at the interface between the brine and the hydrocarbon. The rag layer may also be entrained as droplets or masses within the brine. The rag layer may comprise an emulsion of hydrocarbon, brine, and solids and may include other substances such as asphaltenes.

The desalter **11** may further include one or more outlet ports, e.g., an outlet port **22** for discharging desalted oil or hydrocarbon and an outlet port **23** for discharging some or all of the rag layer emulsion and the brine. The outlet port **22** for discharging desalted hydrocarbon may be positioned, for example, in the upper region of the desalter **11,** and may fluidly communicate with the desalted hydrocarbon within the desalter **11.** From the desalted hydrocarbon outlet port **22,** the desalted hydrocarbon may be directed to other components of the refinery system for further processing, including, for example, a fractionator. The outlet port **23** for discharging the rag layer emulsion and brine may be positioned, for example, in the lower region of the desalter **11** and may fluidly communicate with the brine and the rag layer emulsion within the desalter **11.** The discharged brine and rag layer emulsion may include varying amounts of brine and rag layer emulsion, from mostly brine with some of the rag layer emulsion to mostly rag layer emulsion with some brine. For some embodiments, the desalter **11** may include an outlet port **24** for discharging at least a portion of the rag layer emulsion. This outlet port **24** may be positioned, for example, in the side of the desalter **11,** near the level of the rag layer emulsion, and may fluidly communicate with the rag layer emulsion within the desalter **11.**

The separator **12** may also be configured in a variety of ways. For many embodiments, the separator **12** may be configured as a bulk separator and may have any of several shapes or forms including that of a tank, vessel, or receptacle. For example, the separator may comprise a settling tank, a gravity separator, or a plate separator such as a coalescing plate interceptor (CPI) separator. For many embodiments, the separator **12** may comprise a plate separator available from Pall Corporation of Port Washington, NY, USA under the trade designation LUCID.

The separator may be positioned at a variety of locations in the system. For example, the separator **12** may be positioned downstream of the desalter **11** and upstream of the filter assembly **14,** e.g., upstream of the mixer **13.** The separator may include one or more inlet ports positioned at a variety of locations on the separator and may be coupled to the desalter either directly or indirectly via one or more intervening components. For example, the separator **12** may include an inlet port **25** for receiving brine and the rag layer emulsion from the brine/emulsion outlet port **23** of the desalter **11** via a brine/emulsion feed line **26.** Within the separator **11,** a significant portion of the brine may be separated from the rag layer emulsion. The separator may also include one or more outlet ports positioned at a variety of locations on the separator. For example, an outlet port **27** for discharging brine largely or substantially free of any emulsion may be positioned in a lower region of the separator **12** and may fluidly communicate with the separated brine within the separator **12.** The brine discharged from the separator may be returned to the desalter and/or treated to remove harmful substances before discharge or reuse. The separator **12** may further include an outlet port **28** fluidly communicating with the rag layer emulsion within the separator **12** and positioned, e.g., in an upper region of the separator **12,** for discharging the rag layer emulsion with less brine. For some, but not all, embodiments the brine depleted emulsion may comprise up to about 50% water or brine.

The mixer **13** may be configured in any of a wide variety of different ways and may take any of a variety of shapes and forms. For example, the mixer may comprise an inline mixer or a mixing tank. Further, the mixer may be positioned in a variety of locations in the system. For example, the mixer may be positioned downstream of the desalter and upstream of the dead-end filter assembly. In the illustrated embodiment, the mixer **13** may be positioned downstream of the desalter **11,** downstream of the separator **12,** and upstream of the filter assembly **14.** In addition, the mixer may be fluidly coupled to one or more components of the system, either directly or indirectly via one or more other components. For example, the mixer **13** may be fluidly coupled to the separator **12,** e.g., directly coupled to the separator **12.** For some embodiments, the mixer **13** may, alternatively or additionally, be fluidly coupled directly to the desalter **11.**

The mixer may have one or more inlet ports positioned at a variety of locations on the mixer. For example, the mixer **13** may include an inlet port **29,** e.g., on top of the mixer **13,** for introducing the brine depleted rag layer emulsion into the mixer **13,** e.g., via a brine/ emulsion feed line **30** extending between the brine/emulsion outlet port **28** of the separator **12** and the brine/emulsion inlet port **29** of the mixer **13.** For some embodiments, the mixer **13** may alternatively or additionally include an inlet port **31** positioned, e.g., on top of the mixer **13,** for introducing into the mixer **13** at least some of the rag layer emulsion directly from the desalter **11,** for example, via a rag layer emulsion feed line **32** extending between a rag layer emulsion outlet port **24** of the desalter **11** and the rag layer emulsion inlet port **31** of the mixer **13.**

To modify the rag layer emulsion and allow the emulsion to be effectively filtered, one or more of additional hydrocarbon, a demulsifier, a reverse demulsifier, a coagulant, and a flocculant may be added to the rag layer emulsion from the separator **12** and/or the desalter **11.** For example, the mixer **13** may include one or more inlet ports **33** positioned, e.g., in the upper region of the mixer **13,** for introducing the additional hydrocarbon from a source **34** of the additional hydrocarbon, the demulsifier from a source **35** of the demulsifier, the reverse demulsifier from a source **36** of the reverse demulsifier, the coagulant from a source **37** of the coagulant, and/or the flocculant from a source **38** of the flocculant. Alternatively, the additional hydrocarbon, demulsifier, reverse demulsifier, coagulant, and/or flocculant may be added to the emulsion upstream from the mixer. Mixing the emulsion and one or more of the additional hydrocarbon, the demulsifier, the reverse demulsifier, the coagulant, and the flocculant may promote destabilization of the rag layer emulsion and at least partial, and even substantial, disintegration and decomposition of the emulsion and/or substances within the emulsion, facilitating removal and recovery of the hydrocarbon bound up in the emulsion. For example, the additional hydrocarbon may dissolve stabilizing agents, such as asphaltenes, in the emulsion. The additional hydrocarbon may also reduce the viscosity of the emulsion and/or establish the hydrocarbon as the continuous phase in the emulsion. The demulsifier may break down oil-in-water emulsions, while the reverse demulsifier may break down water-in-oil emulsions. The coagulant and the flocculant may aggregate and agglomerate dispersed particles in the emulsion, forming larger aggregates that settle out of the emulsion. By mixing one or more of the additional hydrocarbon, the demulsifier, the reverse demulsifier, the coagulant, and the flocculant with the rag layer emulsion, the mixer **13** may produce a modified emulsion including a substantially disintegrated, decomposed, and less emulsified mixture of hydrocarbon, brine, and solids. For some, but not all, embodiments the modified emulsion may comprise up to about 5% water or brine.

The mixer may have one or more outlet ports positioned at a variety of locations on the mixer. For some embodiments, the mixer **13** may include a recirculation outlet port **40,** e.g., in the lower region of the mixer **13,** for discharging the modified emulsion to a recirculation pump **41** in a recirculation line **42.** The recirculation pump **41** and recirculation line **42** may recirculate the modified emulsion to a recirculation inlet port **43,** e.g., in the upper region, of the mixer **13,** facilitating further disintegration and decomposition of the rag layer emulsion within the mixer **13.** To further promote disintegration and decomposition of the emulsion within the mixer **13,** a heater (not shown) may be associated with the mixer **13** or the recirculation line **42.** For many embodiments, the heater may heat the emulsion to a temperature up to about 300° F or more. The mixer **13** may also include a modified emulsion outlet port **44,** e.g., in the lower region of the mixer **13,** for discharging the modified emulsion from the mixer **13** to the dead-end filter assembly **14,** for example, via a feed pump **48** in a modified emulsion feed line **45.**

The dead-end filter assembly may be configured in any of numerous ways and may have any of several shapes or forms including that of a tank, vessel, or receptacle. For many embodiments, the filter assembly **14** may include one or more filter elements **46,** e.g., an array of several filter elements, contained within a housing **47.** The housing **47** may include an inlet port **50** positioned, e.g., at one end region of the housing **47,** for receiving the modified emulsion and one or more outlet ports **51** positioned, e.g., at an opposite end region of the housing **47,** for discharging the filtrate. The housing **47** may define a fluid flow path between the inlet and outlet ports **50, 51** within the housing **47.** One or more filter elements **46,** e.g., a plurality of filter elements **46,** may be positioned within the housing **47** across the fluid flow path, and the filter elements **46** may be variously configured. For many embodiments each filter element may have a hollow, generally cylindrical body which includes a permeable filter medium for removing solids from fluids flowing inside-out or outside-in through the filter element. Any of a wide variety of filter media may be included in the filter element, including permeable metallic, ceramic, or polymeric media. The filter media may be in the form of a pleated or spirally wound sheet or a hollow, cylindrical mass or sleeve and may be fashioned from a permeable membrane, a fibrous or sintered sheet or mass, or a mesh sheet. The filter medium may have any of variety of filtering characteristics. For example, the filter medium may have a removal rating in the range from about 1 micron or less to about 100 microns or more. Each filter element may further include an end element, e.g., an end cap, on each axial end of the cylindrical body to direct fluid into or out of the hollow interior of the filter element and generally radially through the filter medium. For some embodiments, the dead-end filter assembly may comprise filter elements having a polymeric fibrous filter medium available from Pall Corporation of Port Washington, New York USA under the trade designation Profile AS.

The dead-end filter assembly may be positioned at a variety of locations in the system. For example, the filter assembly **14** may be positioned downstream of the desalter **11,** downstream of the separator **12,** and/or downstream of the mixer **13.** In the illustrated embodiment, the dead-end filter assembly **14** may be fluidly coupled to the mixer **13.** For example, the modified emulsion outlet port **43** of the mixer **13** may be coupled to the modified emulsion inlet port **50** of the filter assembly **15,** e.g., via the modified emulsion feed line **45** and feed pump **48,** to direct the modified emulsion into the dead-end filter assembly **15.** Within the filter assembly **15** the modified emulsion of hydrocarbon, brine, and solids may be filtered by the filter elements **46,** removing the solids, including colloids and undissolved asphaltenes. A substantial portion of the modified emulsion, including the hydrocarbon, brine, and dissolved asphaltenes, passes through the filter medium as filtrate. The filtrate may be discharged from the filter assembly **15** via the filtrate outlet port **51.** From the filtrate outlet port the filtrate may be directed to any of numerous components. For example, the filtrate may be directed to a downstream separator for separating the filtered hydrocarbon from the brine. In the illustrated embodiment, the filtrate may be recirculated to the desalter **11,** e.g., from the filtrate outlet port **51** of the dead-end filter assembly **15** to a filtrate inlet port **52** of the desalter **11** via a filtrate recirculation line **53.** Within the desalter **11,** the filtrate mixture of the hydrocarbon and brine, with the dissolved asphaltenes, may separate into the hydrocarbon, which can be discharged via the desalted hydrocarbon outlet port **22,** and brine, which can be discharged via the brine/emulsion outlet port **23.**

Embodiments of the invention further include numerous methods for processing crude oil. For example, methods for processing crude oil may comprise adding water to crude oil to produce hydrocarbon and brine and a rag layer, the rag layer including an emulsion comprising hydrocarbon and brine and solids. The methods may further comprise modifying the emulsion, including adding one or more of additional hydrocarbon, a demulsifier, a reverse demulsifier, a coagulant, and a flocculant to the emulsion, and then directing the modified emulsion through a dead-end filter assembly to remove the solids.

Water may be added to crude oil in a variety of ways. For example, water may be added to the crude oil before the water and crude oil are supplied to a desalter, or the water may be added to the crude oil in the desalter. In the illustrated system **10,** the oil and water may be introduced into the desalter **11** separately, e.g., through separate inlet ports **15, 16.** Alternatively, the crude oil and water may be supplied sequentially or simultaneously to the desalter through a common inlet port. Within the desalter, the water and crude oil combine, and the water may remove metals and/or salts and other dissolvables from the crude oil, forming brine. The nature of the crude oil, including the chemical composition of the crude oil itself and the amount and chemical composition of the solids and other substances entrained and/or dissolved in the crude oil, may vary widely depending on many factors, including the geological source of the crude oil and the substances added to extract the crude oil from the geological source. Water may be added to the crude oil in varying amounts sufficient to remove the metals and/or salts and other dissolvables. For example, water may be added to the crude oil in an amount from about 3% water or less to about 10% water or more by volume. Various other chemicals, including, for example, demulsifiers and/or corrosion inhibitors, may be added to the crude oil, the water, and/or the mixture of oil or hydrocarbon and water (brine) in the desalter to further treat the crude oil.

Adding water to the crude oil may also include pressurizing and/or heating the crude oil and/or water, for example, in the desalter. For many embodiments, the hydrocarbon and brine may be heated in the desalter to a temperature in the range from about 200° F or less to about 300° F or more, e.g., in the range from about 225° F to about 275° F. The hydrocarbon and brine may be pressurized within the desalter to a pressure in the range from about 10 psig or less to about 200 psig or more. In some embodiments, the crude oil and/or water may not be heated or may not be pressurized.

Adding water to the crude oil may further comprise separating hydrocarbon or oil from brine within the desalter and producing a rag layer. Separating the brine and the hydrocarbon may include coalescing brine droplets in the desalter. For example, an electrical field may be applied to the mixture of oil and brine in the desalter, the electric field inducing a dipole in droplets of the brine and coalescing the brine droplets. The denser coalesced brine droplets may then collect as an aqueous phase, e.g., in the lower region of the desalter, and the less dense desalted oil or hydrocarbon may collect substantially or largely brine-free, e.g., in the upper region of the desalter. The rag layer may collect on top of the brine, e.g., at the interface between the hydrocarbon and the brine, and/or may be entrained as small droplets or masses, for example, in the brine. The rag layer may comprise any of several substances, including an emulsion of oil, brine, and solids, as well as asphaltenes. The composition of the rag layer emulsion may vary depending, for example, on the nature of the crude oil supplied to the desalter. For example, some rag layer emulsions may comprise water-in-oil emulsions, while other rag layer emulsions may comprise oil-in-water emulsions. Further, some rag layer emulsions may be chemically-stabilized by stabilizing agents such as asphaltenes, and some rag layer emulsions may be particulate-stabilized by particulates in the emulsion and may include little or no asphaltenes in the emulsion. One of many examples of a rag layer emulsion may comprise about 30% to about 40% oil or hydrocarbon by weight, about 30% to about 40% brine by weight, about 5% to about 20% solids by weight, and up to about 10% asphaltenes by weight. These substances may be bound up with one another in the emulsion of the rag layer.

The desalted hydrocarbon and the brine comprising the rag layer emulsion may be separately discharged from the desalter. The desalted hydrocarbon may be discharged at a flow rate in the range from about 20,000 bbl/day or less to about 100,000 bbl/day or more, where one barrel equals 42 U.S. gallons (159 liters). The brine comprising the rag layer may be discharged at a flow rate in the range from about 600 bbl/day or less to about 6000 bbl/day or more. The desalted hydrocarbon may be discharged from the desalter 11 via the desalted hydrocarbon outlet port **22** and may be further processed, e.g., fractionated. The brine comprising the rag layer may be discharged from the desalter **11** via the brine/emulsion outlet port **23.** The brine and rag layer emulsion that are discharged from the desalter **11** may include varying amounts of brine and emulsion, from mostly brine with the rag layer emulsion to mostly rag layer emulsion with some brine.

For some embodiments, methods for processing the crude oil may further comprise separating at least some of the brine from the brine and rag layer emulsion discharged from the desalter **11.** For example, in embodiments where a significant amount of brine is removed from the desalter **11** along with the rag layer emulsion, it may be beneficial to further separate some of the brine in a separator **12,** e.g., a bulk separator as previously described. The brine and rag layer emulsion may, for example, be discharged from the brine/emulsion outlet port **23** of the desalter **11** and supplied to the brine/emulsion inlet port **25** of the separator **12** via the brine/emulsion feed line **26.** Within the separator **12,** at least some of the denser brine may separate from the less dense rag layer emulsion in a variety of ways. For example, the brine may settle from the rag layer emulsion in a settling zone, or the brine may diverge from the rag layer emulsion along a plate separator. Separating the brine from the rag layer emulsion may also include separating larger solids from the rag layer. The larger solids, e.g., solids having a particle size of about 20 microns or more, may settle into the brine from the emulsion, leaving the rag layer emulsion in the separator with finer solids and less brine. The brine with or without larger solids may be discharged from the separator **12,** for example, via the brine outlet port **27.** The larger solids may then be removed, e.g., filtered, from the brine, and some of the clean brine, e.g., up to about 50%, may be returned to the desalter **11,** while the reminder of the clean brine may be treated and reused or discharged from the refinery system. The brine-depleted rag layer emulsion may be discharged from the separator **12** and supplied to the mixer **13.** For example, a brine depleted rag layer emulsion comprising up to about 50% water or brine by volume may be discharged via the brine/emulsion outlet port **28** of the separator **12** and supplied via the brine/emulsion feed line **30** to the brine/emulsion inlet port **29** on the mixer **13.** The flow rate into the mixer **13** from the separator **12** may be in the range from about 6 bbl/day or less to about 600 bbl/day or more.

In the illustrated embodiment, the rag layer emulsion may be supplied to the mixer **13** from the desalter **11** after removing some of the brine in the separator **12.** In other embodiments, the rag layer emulsion, for example, a rag layer emulsion with little brine, may additionally or alternatively be supplied to the mixer directly from the desalter. For example, the rag layer emulsion may be discharged from the rag layer emulsion outlet port **24** on the desalter **11** and supplied via the rag layer emulsion feed line **32** to a rag layer inlet port **31** of the mixer **13.**

Methods for processing crude oil may further comprise adding one or more of additional hydrocarbon, a demulsifier, a reverse demulsifier, a coagulant, and a flocculant to the rag layer emulsion from the desalter or the separator to modify the emulsion and prepare the emulsion for filtration. For example, any of a variety of hydrocarbons may be added to dissolve substances, including asphaltenes, within the emulsion. Asphaltenes, which help to stabilize the emulsion, can quickly foul most filter media. The added hydrocarbon may dissolve the asphaltenes and other substances within the emulsion and enhance the decomposition of the emulsion, allowing the modified emulsion to be effectively filtered. The additional hydrocarbon may also reduce the viscosity of the rag layer emulsion, allowing the liquid components of the emulsion to move readily pass through the filter elements, and may establish the hydrocarbon as the continuous phase of the emulsion. The added hydrocarbon, which may be aromatic or nonaromatic, may include, for example, one or more of reformate, naphtha, gas oil and hydrocarbon condensate. Any of a variety of demulsifiers and/or reverse demulsifiers may be added to at least partially break down the emulsion and further facilitate filtration of the emulsion. The added demulsifiers may include, for example, one or more of ethoxylated or propoxylated acid- or base-catalyzed phenol-formaldehyde resins, ethoxylated or propoxylated polyamines, ethoxylated or propoxylated di-epoxides, and ethoxylated or propoxylated polyols. The added reverse demulsifiers may include, for example, organic polymers, such as liquid cationic acrylamides. Any of numerous coagulants and/or flocculants may also be added to aggregate and agglomerate solids in the emulsion, allowing the larger agglomeration of solids to settle from the emulsion. The coagulant may include liquid inorganic or organic coagulating polymers, including, for example, a liquid, organic, water-soluble, low cationic quaternary ammonium polyelectrolyte. The flocculant may include, for example, a liquid organic acrylic acid/acrylamide copolymer with a high molecular weight and/or a low-to-medium anionic charge.

The amount of the additional hydrocarbon, demulsifiers, reverse demulsifiers, coagulants, and/or flocculants added to the rag layer emulsion from the desalter or separator may vary depending on a variety of factors, including, for example, one or more of temperature; pressure; pH; amount of shear; composition of the organic and inorganic solids; concentration of asphaltenes, well-treating chemicals, paraffins, or sulfur; API gravity of the crude oil, the difference in density between the brine and the crude oil, and the composition and stability of the emulsion. For many embodiments, hydrocarbon may be added to the emulsion in an amount up to about ten or more times the volume of emulsion. For some embodiments, the amount of stabilizing agents, e.g., asphaltenes, in the rag layer emulsion may be small and less hydrocarbon may be added, e.g., one to two to more times the volume of the emulsion. The demulsifier, reverse demulsifier, coagulant, and/or flocculant may be added in an amount in the range from 0% to about 1% or more of the rag layer.

The additional hydrocarbon, deemulsifier, reverse demulsifier, coagulant, and flocculant may be added to the rag layer emulsion from the desalter or the separator in any of a variety of different ways. For many embodiments, the additional hydrocarbon, deemulsifier, reverse demulsifier, coagulant, and/or flocculant may be added to the rag layer emulsion within the mixer **13.** Within the mixer one or more of the additional hydrocarbon, demulsifier, reverse demulsifier, coagulant, and flocculant are mixed with the rag layer emulsion to produce a modified emulsion that is sufficiently broken down into its constituents, including hydrocarbon, brine, solids, and dissolved asphaltenes to allow the solids to be effectively filtered from the hydrocarbon and brine. Mixing one or more of the additional hydrocarbon, demulsifier, reverse demulsifier, coagulant, and flocculant with the rag layer emulsion may then comprise substantially dissolving one or more substances, including asphaltenes, from the rag layer emulsion and/or destabilizing or decomposing the rag layer emulsion. For example, a modified emulsion comprising up to about 5% water by volume may be discharged from the modified emulsion outlet port.

For many embodiments, mixing one or more of the additional hydrocarbon, deemulsifier, reverse demulsifier, coagulant, and flocculant with the rag layer emulsion may further comprise recirculating the modified emulsion through the mixer. For example, the modified emulsion may be discharged from the mixer **13** via the recirculation outlet port **40** and recirculated through the mixer **13** via the recirculation pump **41** in the recirculation line 42, reentering the mixer **13** at the recirculation inlet port **38.** Recirculating the modified emulsion allows asphaltenes and other substances to be even more completely dissolved and even more thoroughly destabilizes and decomposes the emulsion, facilitating the recovery of an even greater amount of the hydrocarbon in the emulsion.

Heating the emulsion may further promote dissolving substances such as asphaltenes and destabilizing and decomposing the emulsion. The emulsion may be heated to a temperature in a range up to about 300 ° F or more, for example, in the mixer **13,** in the recirculation line **42,** or en route to the dead-end filter assembly **14.**

After mixing, the modified emulsion may be directed through a dead-end filter assembly to remove solids and produce a filtrate principally comprising filtered hydrocarbon and brine. The modified emulsion may be discharged from the mixer and supplied to the dead-end filter assembly either directly or indirectly via one or more additional components. For example, in the illustrated embodiment, the modified emulsion may be discharged from the mixer **13** via the modified emulsion outlet port **44** and supplied to the dead-end filter assembly **14** via a feed pump **48** in the modified emulsion feed line **45,** entering the dead-end filter assembly **14** via the modified emulsion inlet port **50.** The modified emulsion may be supplied to the dead-end filter assembly at a variety of flow rates and pressures, depending, for example, on the size of the dead-end filter assembly and the amount of the modified emulsion to be processed. For some embodiments, the flow rate of the modified emulsion into the dead-end filter assembly may be in the range from about 12 bbl/day gpm or less to about 6000 bbl/day gpm or more. The pressure may be in the range from about 10 psig or less to about 200 psig or more.

Within the dead-end filter assembly **14,** all of the modified emulsion passes through one or more filter elements **46.** Passing the modified emulsion through the filter elements **46** includes directing all of the modified emulsion through the filter media of the filter elements **46,** where at least a substantial portion of the solids are removed. For many embodiments, directing the modified emulsion through the filter medium may include directing the modified emulsion through a filter medium having a removal rating in the range from about 1 micron or less to about 100 microns or more, e.g., from about 1 micron or less to about 40 microns. Filtered hydrocarbon and brine, as well as dissolved asphaltenes, may then emerge as filtrate from the filter elements **46** and may be directed by the housing **47** to the filtrate outlet port **51.** The filtrate may be discharged from the dead-end filter assembly to a variety of components for further processing. For example, the filtrate may be discharged to a separator to separate the filtered hydrocarbon from the filtered brine. The filtered hydrocarbon may then be further processed, e.g., fractionated, within the refinery system. In the illustrated embodiment, the filtered hydrocarbon and brine may be recirculated to the desalter. For example, filtrate, including both the filtered hydrocarbon and brine, and any dissolved asphaltenes, may be discharged from the filtrate outlet port **51** of the dead-end filter assembly **14** and returned to the desalter **11** via the filtrate recirculation line **53,** entering the desalter **11** via one of the inlet ports, e.g., the filtrate inlet port **52.** Within the desalter **11,** the filtered hydrocarbon and brine and any dissolved asphaltenes combine with the crude oil and water in the desalter **11,** where they may begin the process of breaking down the rag layer emulsion and dissolving substances, including asphaltenes, in the rag layer emulsion. The filtered hydrocarbon and brine may separate within the desalter **11** and may be respectively discharged from the desalter **11** along with the desalted hydrocarbon and the brine, e.g., via the desalted hydrocarbon outlet port **22** and the brine/emulsion outlet port **23.**

Methods embodying the invention may further comprise cleaning and/or replacing the filter elements in the dead-end filter assembly after the filter elements become sufficiently fouled to require cleaning or replacing. For example, after the pressure drop across the filter elements **46** rises to a predetermined level, or the flow rate through the filter elements **46** falls to a predetermined level, flow of the modified emulsion through the dead-end filter assembly **14** may be terminated. The filter elements **46** may then be cleaned in any of numerous ways. For example, the filter elements may be cleaned in situ, i.e., within the filter housing, or ex situ, i.e., outside the filter housing, using a variety of solvent soaking techniques, including hot hydrocarbon soaking, and/or washing or backwashing techniques, with or without gas assist. Alternatively, the fouled filter elements **46** may be replaced with new filter elements **46.** Flow of the modified emulsion may then be reestablished through the dead-end filter assembly **14.**

Although the invention has been disclosed in the embodiments previously described and/or illustrated, the invention is not limited to those embodiments. For instance, one or more features of an embodiment may be eliminated or modified, one or more features of one embodiment may be combined with one or more features of other embodiments, or embodiments with very different features may be envisioned, all without departing from the scope of the invention. For example, the separator **12** may be eliminated from the system **10** of Figure **1****,** the remainder of the system including the previously described components operating as previously described. The rag layer emulsion may be discharged from the rag layer emulsion outlet port **24** of the desalter **11** and supplied directly or indirectly to the mixer **13,** e.g., via the rag layer emulsion feed line **35.** Brine with little or no rag layer emulsion may be removed from the desalter **11,** e.g., via the brine/emulsion outlet port **23,** treated, and then reused within the refinery system or discharged from the refinery system.

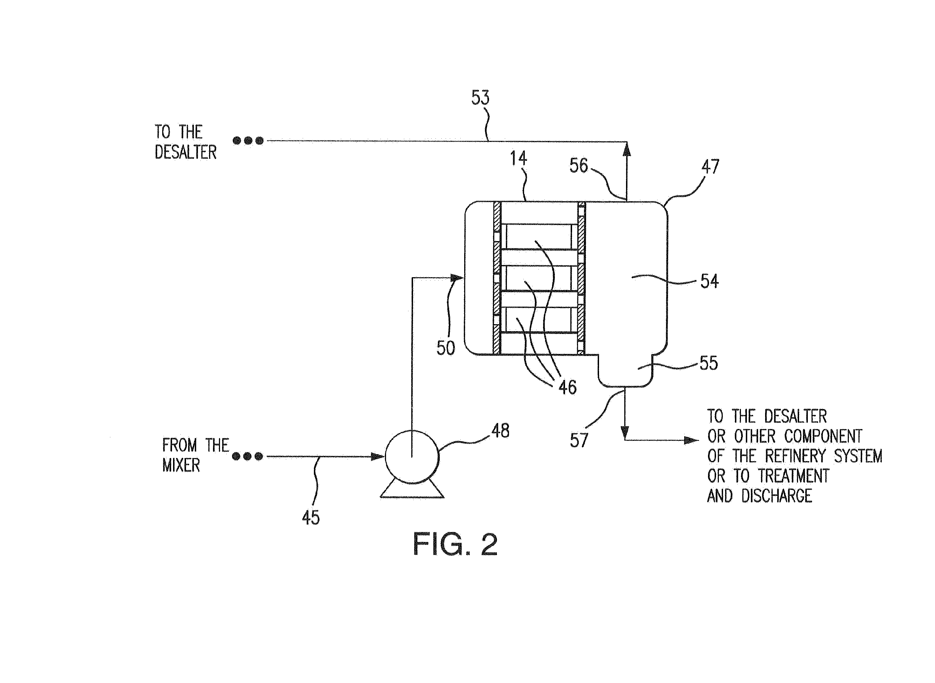

As another example, a system for processing crude oil may include a modified dead-end filter assembly **14,** for example, as shown in Figure **2****.** The remainder of the system may include the previously described components operating as previously described. The modified dead-end filter assembly **14** may include a settling zone **54** within the housing **47** downstream of the filter elements **46.** Within the settling zone **54,** the less dense filtered hydrocarbon, along with other substances such as the dissolved asphaltenes, may separate, e.g., toward the upper region of the housing **47,** away from the denser filtered brine, e.g., in the lower region of the housing **47.** The housing **47** may further include a brine trap **55** in the lower region of the housing **47** to collect the brine. A filtered hydrocarbon outlet port **56** for discharging the separated filtered hydrocarbon, along with the dissolved asphaltenes, may be positioned on the housing **47,** e.g., in the upper region, and a filtered brine outlet port **57** for discharging filtered brine may also be positioned on the housing **47,** e.g., in the brine trap **55.** All or a portion of the discharged filtered brine may be sent to the desalter or any other component of the refinery system or may be treated and discharged from the refinery system. All or a portion of the discharged filtered hydrocarbon may be returned to the desalter, e.g., via the filtrate recirculation line **53,** or may be directed to other components of the refinery system for further processing, e.g., fractionation.

As an alternative, the system **10** of Figure **1** may further include a separator (not shown) downstream of the dead-end filter assembly **14.** The filtrate from the dead-end filter assembly **14,** including the filtered hydrocarbon, the filtered brine, and any dissolved asphaltenes, may be discharged from the filtrate outlet port **51** and passed, directly or indirectly, to the separator, where the filtered hydrocarbon may be separated from the filtered brine within the separator. The separator may comprise a bulk separator as previously described or any other separator suitable for separating the filtered hydrocarbon from the filtered brine. The filtered hydrocarbon may be discharged from the separator and sent to the desalter or any other component of the refinery system. The filtered brine may be discharged from the separator and sent to the desalter or any other component of the refinery system or treated and discharged from the refinery system.

Methods for processing crude oil may further comprise separating the filtrate from the dead-end filter assembly into filtered hydrocarbon, along with other substances such as the dissolved asphaltenes, and filtered brine, e.g., within the dead-end filter assembly or within a separator. For example, in the illustrated embodiment separating the filtrate may include passing the filtrate into a settling zone **54** in the housing **47** of the dead-end filter assembly **14** downstream of the filter elements **46.** In the settling zone **54,** the denser filtered brine may settle in a lower region of the housing **47,** e.g., into the brine trap **55,** away from the less dense filtered hydrocarbon in an upper region of the housing **47.** Methods may further comprise separately discharging filtered hydrocarbon and the filtered brine from the dead-end filter assembly **15,** e.g., via the filtered hydrocarbon outlet port **56** and the filtered brine outlet port 57, respectively, as previously described.

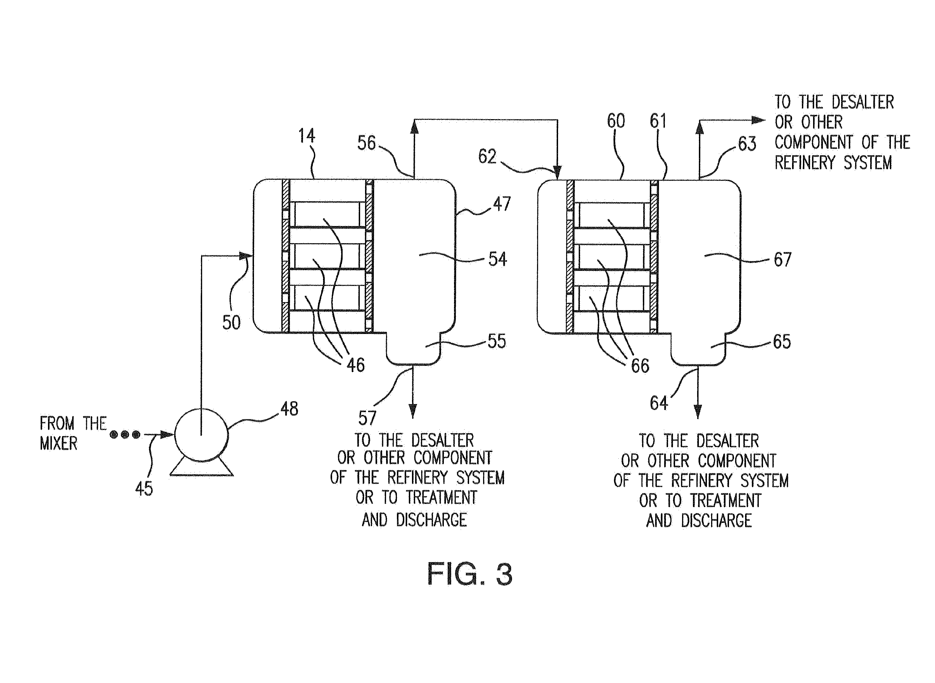

Another embodiment of a system for processing crude oil may further comprise a coalescer assembly **60,** for example, as shown in Figure **3****.** The remainder of the system may include the previously described components operating as previously described. The coalescer assembly may be fluidly coupled, directly or indirectly, to a dead-end filter assembly, for example, to the filtered hydrocarbon outlet port **56** of the dead-end filter assembly **14** of the system of Figure **2** or to the filtrate outlet port **51** of the dead-end filter assembly **14** of the system **10** of Figure **1**. In both systems, the coalescer assembly may serve to break any remaining emulsion and/or to coalescer the filtered brine, including any small droplets of filtered brine, as the discontinuous phase, entrained in the filtered hydrocarbon, as the continuous phase. The coalesced filtered brine and the filtered hydrocarbon may then be separated from one another, for example, in the coalescer assembly **60.**

Any of numerous coalescer assemblies may be employed. Generally, the coalescer assembly **60** may include a housing **61,** e.g., a tank, a vessel, or any other receptacle. The housing **61** may have an inlet port **62** positioned, e.g., at one end of the housing **61,** and one or more outlet ports. For example, in the illustrated embodiment, the housing **61** may include a hydrocarbon outlet port **63** positioned, e.g., at the opposite end in an upper region of the housing **61,** and a brine outlet port **64** positioned, e.g., at the opposite end in a lower region of the housing **61.** The housing **61** may include a brine trap **65** for collecting the brine, and the brine outlet port **64** may be located on the brine trap **65.**

The coalescer housing **61** defines a fluid flow path within the housing **61** between the inlet port **62** and the outlet ports **63, 64.** One or more coalescer elements **66,** e.g., a plurality of coalescer elements **66,** may be positioned within the housing **61** across the fluid flow path. Each coalescer element **66** may be variously configured. For many embodiments, each coalescer element may have a hollow, generally cylindrical body which includes a permeable arrangement for coalescing small filtered brine droplets, as the discontinuous phase, entrained in the filtered hydrocarbon, as the continuous phase. Each coalescer element may further include end elements, e.g., an end cap, on each axial end of the cylindrical body to direct fluid into or out of the hollow interior of the coalescer element and generally radially through the coalescing arrangement. For some embodiments, the coalescing assembly may comprise coalescing elements available from Pall Corporation of Port Washington, New York USA under the trade designation PhaseSep.

The coalescer assembly **60** may further include a separating region downstream of the coalescer elements **66** for separating the coalesced filtered brine from the filtered hydrocarbon. The separating region may be variously configured. For example, the separating region may include a permeable separation medium which allows passage of one of the components, e.g., the filtered hydrocarbon, but retards passage of the other component, e.g., the filtered brine. The hydrocarbon outlet port may then fluidly communicate with one side, e.g., the downstream side, of the permeable separation medium, while the brine outlet port fluidly communicates with the other side, e.g., the upstream side, of the separation medium. In the illustrated embodiment, the separating region may comprise a settling zone **67** within the housing **61** downstream of the coalescer elements **66.** Within the settling zone **67,** the less dense filtered hydrocarbon, along with other substances such as the dissolved asphaltenes, may separate, e.g., toward the upper region of the housing **61,** away from the denser coalesced and filtered brine, e.g., in the lower region of the housing **61.** The coalesced, filtered brine may be discharged from the coalescer assembly **60,** e.g., via the brine outlet port **64,** and sent to the desalter or any other component of the refinery system or may be treated and discharged from the refinery system. The filtered hydrocarbon may have less than about 25 ppmw free water and may be discharged from the coalescer assembly **60,** e.g., via the hydrocarbon outlet port **63.** From the coalescer assembly **60,** some or all of the discharged hydrocarbon may be sent to the desalter **11** or to the mixer **13.** Returning some or all of the discharged hydrocarbon to the mixer **13** allows reuse of the hydrocarbon, reduces the volume of fresh additional hydrocarbon to be added to the mixer **13,** and helps establish the hydrocarbon as the continuous phase in the modified emulsion. For many embodiments, the coalescer assembly **60** may so effectively break any oil/brine emulsion that the hydrocarbon may be directly sent to any other component of the refinery system, e.g., a fractionator, for further processing.

Methods for processing crude oil may further comprise coalescing filtered brine, including any small droplets of filtered brine, as the discontinuous phase, entrained in the filtered hydrocarbon, as the continuous phase, along with any dissolved asphaltenes, and then separating the coalesced, filtered brine from the filtered hydrocarbon. Coalescing the filtered brine may include directing the filtered hydrocarbon and brine through one or more coalescer elements **66** within a coalescer assembly **60,** including aggregating small droplets of filtered brine and producing larger droplets or masses of filtered brine. Separating the coalesced, filtered brine filtered hydrocarbon may, for example, include settling the denser coalesced brine away from the less dense filtered hydrocarbon in a settling zone **67.** Alternatively, separating the brine from the hydrocarbon may comprise passing one but not the other of the brine and hydrocarbon through a permeable separation medium. Methods may further comprise separately discharging the filtered hydrocarbon and the filtered brine from the coalescer assembly **60,** e.g., via the hydrocarbon outlet port **63,** and the brine outlet port **64,** respectively, as previously described. Discharging the filtered hydrocarbon from the coalescer assembly **60** may include returning some or all of the filtered hydrocarbon to the desalter **11** or the mixer **13** or sending the filtered hydrocarbon to any other component of the refinery system.

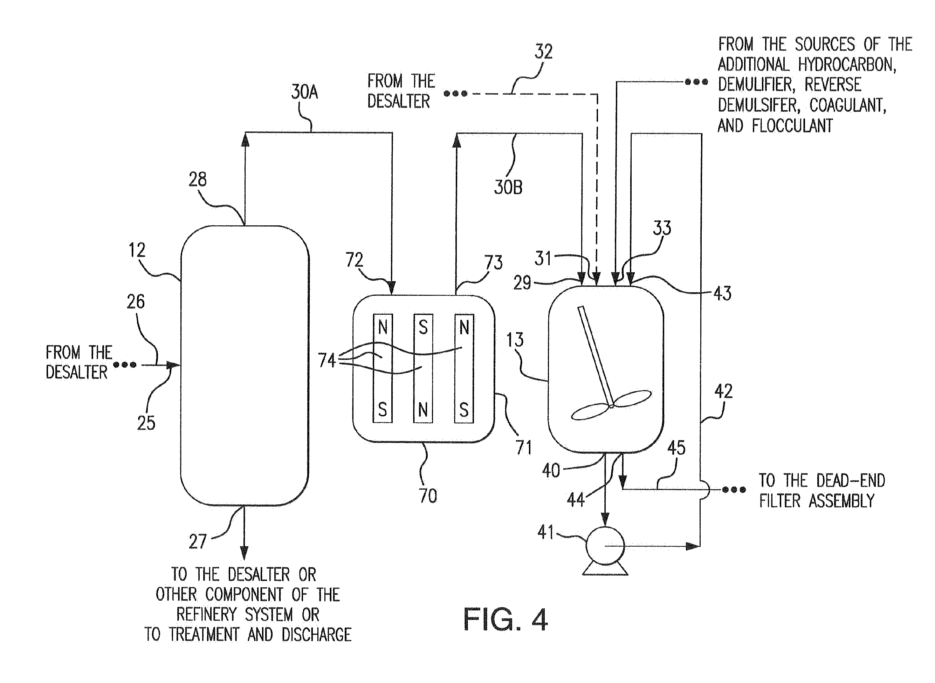

Another embodiment of a system for processing crude oil may comprise a magnetic filter **70,** for example, as shown in Figure **4****.** The remainder of the system may include the previously described components of Figure **1****,** **2** and/or **3** operating as previously described. The magnetic filter may serve to remove magnetic solids, e.g., magnetic particles, and may be positioned at a variety of locations in the system, including downstream of the desalter, downstream of the separator, and/or downstream of the mixer. In the illustrated embodiment, the magnetic filter **70** may be positioned upstream of the mixer **13** to remove magnetic solids from the emulsion entering the mixer **13** and inhibit fouling of mixer **13.** Alternatively or additionally, a magnetic filter may be located in the recirculation line of the mixer or between the mixer and the dead-end filter assembly to remove magnetic solids from the modified emulsion.

Any of a wide variety of magnetic filters may be employed. Generally, the magnetic filter **70** may include a housing **71** having the shape, for example, of a tank, vessel, or any other receptacle. The housing **71** may include a fluid inlet port **72** and a fluid outlet port **73** and may define a fluid flow path between the inlet and outlet ports **72, 73.** In the fluid flow path within the housing **71,** one or more magnetic elements **74** may be arranged to attract and remove magnetic solids from the emulsion, e.g., the rag layer emulsion or the modified emulsion, flowing along the fluid flow path in the magnetic filter **70.** In the illustrated embodiment, the fluid inlet port **72** of the magnetic filter **70** may be fluidly coupled, directly or indirectly via one or more other components, to the brine/emulsion outlet port **28** of the separator **12,** e.g., via a first portion **30A** of the brine/emulsion feed line. The fluid outlet port **73** of the magnetic filter **70** may be fluidly coupled, directly or indirectly, to the brine/ emulsion inlet port **29** of the mixer **13,** e.g., via a second portion **30B** of the brine/emulsion feed line. The rag layer emulsion may thus be directed through the magnetic filter **70** to remove magnetic solids as the emulsion is passed between the separator **12** and the mixer **13.**

Methods for processing crude oil may further comprise magnetically removing solids from the emulsion, e.g., either the rag layer emulsion or the modified emulsion. Magnetically removing the solids may comprise directing the emulsion through a magnetic filter, including passing the emulsion past magnetic elements that attract and remove magnetic solids from the emulsion. In the illustrated embodiment, directing the emulsion through the magnetic filter **70** may include passing the rag layer emulsion from the brine/emulsion outlet port **28** of the separator **12** into the fluid inlet port **72** of the magnetic filter **70,** along the magnetic elements **74** where the magnetic solids are removed, and from the fluid outlet port **73** of the magnetic filter **70** to the brine/emulsion inlet port **29** on the mixer **13.** In other embodiments, directing the emulsion through the magnetic filter may include passing the modified emulsion through a magnetic filter located in the recirculation line of the mixer or located between the mixer and the dead-end filter assembly.

Other embodiments of the system may include other components, such as one or more additional separators, located elsewhere in the system. For example, the mixer may comprise a static inline mixer which may be directly coupled to a separator for separating additional brine and/or solids from the modified emulsion before the modified emulsion is fed to the dead-end filter assembly.

In still other embodiments, the rag layer emulsion may be stored, e.g., in tanks or other receptacles. The one or more of the additional hydrocarbon, demulsifier, reverse demulsifier, coagulant, and flocculant may be added to the rag layer emulsion either before or after storage. For example, the rag layer emulsion may be directed from the rag layer emulsion outlet port of the desalter or the brine/emulsion outlet port of the separator to a storage tank, where the rag layer emulsion may be stored for a period of time. From the storage tank, the rag layer emulsion may later be supplied, directly or indirectly via other components of the system, to the mixer. The rag layer emulsion may then be modified and filtered as previously described.

The present invention thus encompasses innumerable embodiments and is not restricted to the particular embodiments that have been described, illustrated, and/or suggested herein. Rather, the present invention includes all embodiments and modifications that may fall within the scope of the claims.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as" and "e.g.") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A method for processing crude oil comprising:
adding water to crude oil to produce hydrocarbon and brine and a rag layer including an emulsion comprising hydrocarbon and brine and solids;
modifying the emulsion, including adding one or more of additional hydrocarbon, a demulsifier, a reverse demulsifier, a coagulant, and a flocculant to the emulsion; and
directing the modified emulsion through a dead-end filter assembly to remove solids.

2. The method of claim 1, further comprising separating a portion of the brine from the emulsion before modifying the emulsion.

3. The method of claim 1, wherein adding water to the crude oil includes passing crude oil and water into a desalter, the method further comprising recirculating filtrate from the filter assembly to the desalter.

4. The method of claim 1, further comprising directing filtrate from the filter assembly to a coalescer assembly and separately extracting filtered hydrocarbon and brine from the coalescer assembly.

5. The method of claim 4, when the filtrate includes filtered hydrocarbon and brine, the method further comprising separating a portion of the brine from the filtered hydrocarbon and directing the filtered hydrocarbon to the coalescer assembly.

6. The method of claim 1 further comprising directing the emulsion or the modified emulsion through a magnetic filter before directing the modified emulsion through the filter assembly.

7. A system for processing crude oil, the system comprising:
a desalter including one or more inlets for introducing crude oil and water into the desalter, the desalter producing hydrocarbon and brine and a rag layer including an emulsion comprising hydrocarbon and brine and solids, the desalter further including a first outlet for discharging at least a portion of the hydrocarbon and one or more additional outlets for discharging brine and the emulsion;
a mixer coupled to the desalter to modify the emulsion including adding one or more of additional hydrocarbon, a demulsifier, a reverse demulsifier, a coagulant, and a flocculant to the emulsion; and
a dead-end filter assembly coupled to the mixer to filter solids from the modified emulsion.

8. The system of claim 7, further comprising a separator coupled to the desalter to separate at least a portion of the brine from the discharged emulsion, wherein the mixer is coupled to the separator.

9. The system of claim 7, further comprising a coalescer assembly coupled to the dead-end filter assembly to separate filtrate from the filter assembly into filtered hydrocarbon and brine.

10. The system of claim 7 further comprising a magnetic filter positioned upstream of the dead-end filter assembly to remove magnetic solids.
